Europäisches Patentamt

(19) European Patent Office

Office européen des brevets

(11) Numéro de publication : **0 139 177**
**B1** .

(12) **FASCICULE DE BREVET EUROPÉEN**

(45) Date de publication du fascicule du brevet :
**25.05.88**

(21) Numéro de dépôt : **84110255.1**

(22) Date de dépôt : **29.08.84**

(51) Int. Cl.⁴ : **C 11 B 7/00, A 23 D 5/00,**
**A 23 G 1/00, A 23 L 1/24**

(54) **Procédé de production de fractions comestibles de matières grasses et leur utilisation.**

(30) Priorité : **07.10.83 CH 5467/83**

(43) Date de publication de la demande :
**02.05.85 Bulletin 85/18**

(45) Mention de la délivrance du brevet :
**25.05.88 Bulletin 88/21**

(84) Etats contractants désignés :
**DE FR IT NL SE**

(56) Documents cités :
**FR-A- 2 369 800**
**FR-A- 2 455 080**
**GB-A- 827 172**
**US-A- 4 265 826**
**Le dossier contient des informations techniques présentées postérieurement au dépôt de la demande et ne figurant pas dans le présent fascicule.**

(73) Titulaire : **SOCIETE DES PRODUITS NESTLE S.A.**
**Case postale 353**
**CH-1800 Vevey (CH)**

(72) Inventeur : **Dieffenbacher, Albrecht**
**Chemin de la Tour-Ronde 2**
**CH-1806 Saint-Legier (CH)**

**0 139 177**

## Description

La présente invention se rapporte à un procédé de fractionnement à sec d'une matière grasse végétale pouvant cristalliser sous plusieurs formes aux températures voisines de la température ambiante, aux fractions obtenues et à leur utilisation.

Les corps gras naturels sont des mélanges complexes de triglycérides dans la composition desquels entrent des acides gras saturés solides et des acides gras insaturés fluides de différentes longueurs de chaîne. La composition des acides gras et leur distribution à l'intérieur des molécules de triglycérides sont particulières à chaque matière grasse et déterminent ses propriétés et en particulier son comportement à la fusion. Les matières grasses naturelles étant des mélanges, il se produit des phénomènes d'interaction (eutectiques) modifiant l'état physique des constituants dans une certaine plage de température, les triglycérides pouvant de plus cristalliser sous plusieurs formes.

Les graisses végétales, par exemple le beurre de cacao, présentent généralement ces phénomènes de polymorphisme cristallin autour de la température ambiante dans les cas où les triglycérides disaturés-monoinsaturés et monosaturés-diinsaturés sont prépondérants. Mis à part le beurre de cacoo, ces graisses ne trouvent pas d'application directe dans l'alimentation à cause de leur nature plastique et on a proposé de les fractionner pour les valoriser soit comme huile de table, soit comme graisse de confiserie, par exemple en remplacement du beurre de cacao.

L'industrie de la confiserie/chocolaterie utilise de grandes quantités de beurre de cacao car il possède des propriétés physiques uniques très prisées dans cette industrie : il est solide jusqu'à 25 °C, fond rapidement sur une plage restreinte de température, entre 35-37 °C (en particulier dans la bouche ce qui procure les sensations de fondant et de saveur) et durcit rapidement avec un rétreint contrôlable au refroidissement (ce qui permet son démoulage). On a donc pensé à utiliser d'autres graisses végétales dont la production est plus abondante comme graisse de remplacement puisque les zones climatiques convenant à la culture du cacao sont restreintes et l'offre de beurre de cacao limitée. De telles graisses doivent avoir un comportement physique très voisin du beurre de cacao pour être compatibles avec ce dernier. Dans le but de fabriquer de tels substituts, on fractionne industriellement les graisses végétales, et en particulier l'huile de palme, par différentes méthodes :

— Une première voie à l'aide de solvants consiste à refroidir une solution de la matière grasse dans un solvant organique par exemple l'acétone, l'hexane, l'isopropanol, le 2-nitropropane, le dichlorodifluorométhane, le trichlorotrifluoroéthane, à séparer les formes cristallines stables β et β' désirées par filtration et à éliminer le solvant par évaporation. On peut appliquer cette méthode à l'huile naturelle par exemple comme décrit dans le brevet britannique No. 827172 ou à une fraction concrète obtenue après un premier fractionnement à sec. Dans le but d'augmenter le rendement en huile de table tout en produisant une fraction utilisable en confiserie, on l'a appliquée à une huile ayant subi une interestérification (ou transestérification) par voie catalytique, c'est-à-dire un réarrangement interne des acides gras dans la molécule de triglycéride par exemple comme décrit dans la demande de brevet français No. 2 427 386. Un autre procédé décrit par exemple dans le brevet des Etats-Unis No. 3 431 116 prévoit d'hydrogéner sélectivement une stéarine obtenue comme sous-produit de la fabrication d'huiles de table à partir de graines de coton de manière à transformer l'acide linoléique en acide oléique préalablement au fractionnement par solvants. Tous ces procédés permettent d'obtenir des fractions utilisables en confiserie mais ont l'inconvénient de mettre en œuvre des agents chimiques et/ou des solvants dont il faut prévoir le traitement et le recyclage ainsi que leur élimination des corps gras. Ceci nécessite de lourdes installations qui ne sont pas toujours disponibles dans les régions de collecte de la matière première et entraîne une consommation importante d'énergie.

— Une seconde voie, en milieu aqueux, est basée sur la mouillabilité des cristaux en présence d'un agent tensioactif, ce qui permet de séparer une suspension aqueuse de cristaux de l'huile liquide, les cristaux étant ensuite recueillis par centrifugation. Cette méthode a l'inconvénient de produire un grand volume d'eaux usées.

— Une troisième voie comprend le fractionnement à sec. Selon ce procédé, décrit par exemple dans la demande de brevet allemand No. 2 916 604, on traite la graisse entièrement sous forme liquide de manière contrôlée et, après avoir ensemencé la masse fondue avec des cristaux de forme bêta de cette graisse à 45 °C, on refroidit et on filtre les cristaux formés. L'opération est répétée une seconde fois à température plus basse. Selon le brevet des Etats-Unis No. 4 265 826, par exemple, la cristallisation est dirigée par une étape d'ensemencement en cristaux et la filtration a lieu sous un vide léger, par exemple celui d'une pompe à eau. Ces méthodes n'évitent pas l'occlusion d'une partie de la fraction liquide dans les agrégats de cristaux, ce qui conduit soit à une fraction n'ayant pas les caractéristiques désirées, soit à un rendement bas lors de la séparation. Ceci confirme l'opinion générale des spécialistes selon laquelle il n'était pas possible jusqu'à présent d'obtenir une fraction concrète compatible avec le beurre de cacao par séparation à sec de l'huile de palme avec un rendement comparable à celui obtenu par l'utilisation de solvants.

La présente invention se propose de mettre à disposition un procédé de fractionnement à sec des graisses végétales pouvant cristalliser sous plusieurs formes autour de la température ambiante conduisant à des fractions concrètes compatibles avec le beurre de cacao avec un rendement

2

comparable à celui du fractionnement à l'aide de solvants sans présenter les inconvénients des procédés connus de fractionnement par voie aqueuse ou par solvants.

Le procédé selon l'invention est caractérisé par les étapes suivantes :

(a) on chauffe la matière grasse pré-raffinée de manière à la mettre entièrement sous forme liquide,

(b) on refroidit le liquide de l'étape (a) jusqu'à une température de 3 à 10 °C au-dessus de sa température de solidification,

(c) on l'ensemence avec 0,05 à 0,2 % en poids de cristaux de forme bêta obtenus à partir de ladite matière grasse ou du beurre de cacao et stabilisés sous la forme désirée par entreposage pendant au moins 4 semaines à 30-35 °C,

(d) on refroidit la suspension de l'étape (c) progressivement à raison de 0,5 à 1,5 °C/heure jusqu'à une température de fractionnement comprise entre 15 et 35 °C et

(e) on filtre la suspension de l'étape (d) tout en maintenant la température de fractionnement, sous une pression augmentant progressivement par paliers d'environ 5,9-6,9 bar (6-7 kg/cm²), en maintenant la pression appliquée pendant au moins 5 min jusqu'à une pression maximum d'au moins 29,4 bar (30 kg/cm²), on maintient la pression maximum pendant au moins 1 h et on recueille une fraction concrète ($C_1$) dont l'indice d'iode est au maximum 50 et une fraction fluide ($F_1$) d'indice d'iode supérieur à celui de la fraction concrète ($C_1$), la différence entre l'indice d'iode de la fraction ($C_1$) et celui de la fraction ($F_1$) étant au moins 10.

Les graisses végétales susceptibles d'être fractionnées selon l'invention sont celles qui présentent un polymorphisme cristallin autour de la température ambiante, c'est-à-dire entre 20 et 35 °C. Parmi celles-ci, appelées génériquement suifs végétaux, on peut citer la graisse de shea (karité, Butyrospermum parkii ou Bassia parkii), la graisse de sal (Shorea robusta), le suif de Bornéo (Shorea stenoptera), la graisse de kokum (Garcinia indica), la graisse de mangue (Mangifera indica), la graisse de mowrah (Madhuca latifolia et Madhuca longifolia), l'huile de palme (Elaeis guineensis), etc...

Par matière grasse pré-raffinée, on entend que la matière grasse a subi des traitements de :

— démucilagination pour insolubiliser les phospholipides, les polysaccharides, les gommes, les résines, etc..., séparés par centrifugation,

— neutralisation afin d'éliminer la majeure partie des acides gras libres sous forme de savons, jusqu'à un taux d'acides gras libres inférieur à 0,2 % et de préférence inférieur à 0,1 % en poids. De préférence, la matière grasse fractionnée est raffinée de manière connue par les opérations supplémentaires successives suivantes :

— décoloration par passage sous forme fondue sur du charbon activé ou d'autres absorbants, par exemple les terres décolorantes à base de silicate d'aluminium activé comme la montmorillonite ou la bentonite, et filtration de manière à enlever la chlorophylle et les pigments caroténoïdes et

— désodorisation par entraînement à la vapeur sous vide à une température inférieure à 260 °C et de préférence inférieure à 200 °C.

Toutes les étapes de pré-raffinage et de raffinage doivent être exécutées de manière à éviter l'isomérisation des triglycérides.

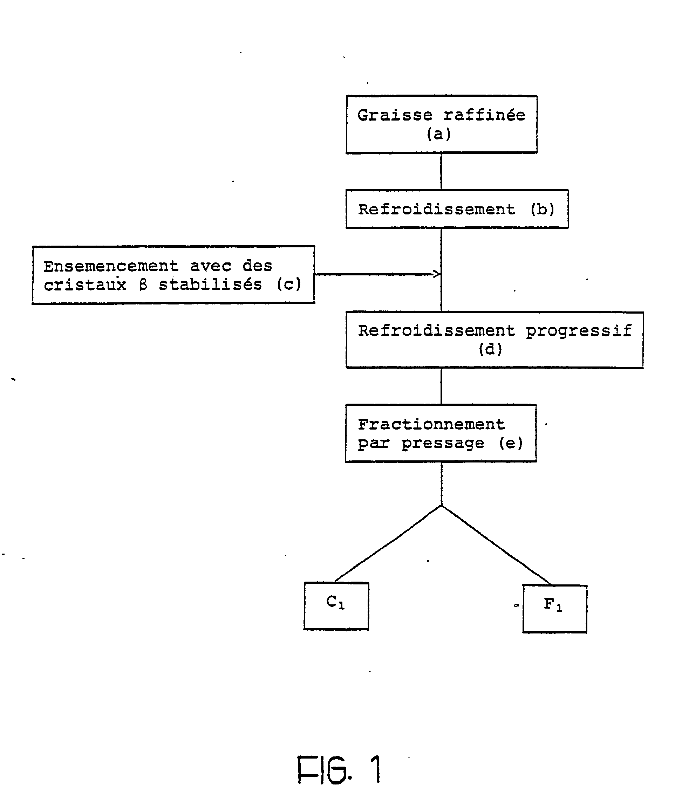

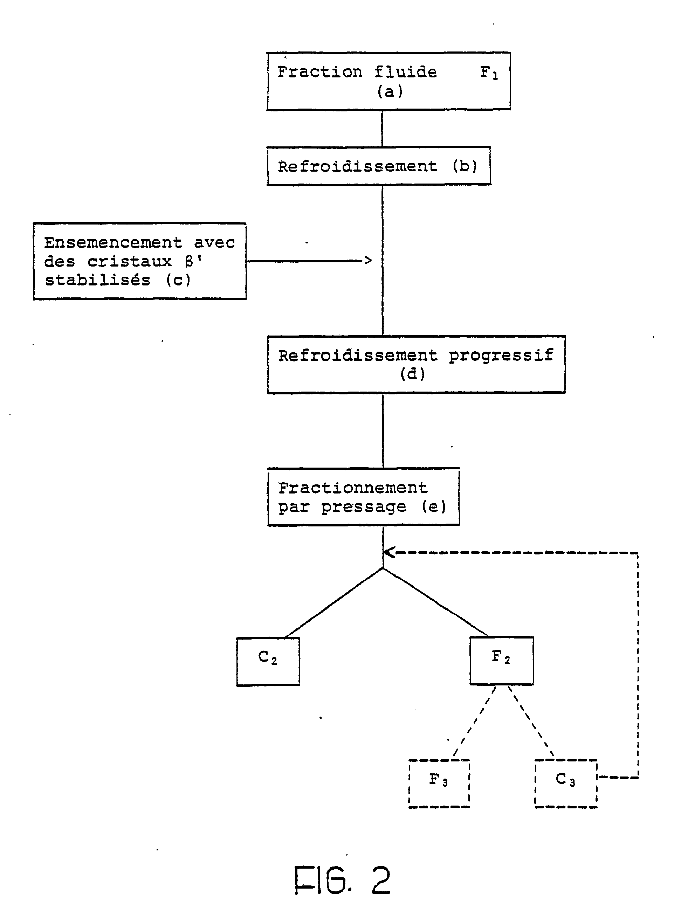

Pour mettre en œuvre le présent procédé, on opère conformément aux schémas 1 et 2 du dessin annexé (Figures 1 et 2) qui représentent deux formes d'exécution de l'invention comprenant respectivement un ou deux cycles de fractionnement.

Selon le schéma 1

Cette variante d'exécution comprenant un seul cycle de fractionnement est particulièrement adaptée aux suifs végétaux tels que la graisse de mangue, de sal, de mowrah ou de kokum riches en acides saturés et monoinsaturés et ayant une configuration particulière des triglycérides caractérisée par un pourcentage élevé en 2-monoinsaturés et un pourcentage bas en trisaturés. Cette composition les rend assez proches du beurre de cacao du point de vue chimique et physicochimique.

Comme indiqué au tableau I ci-dessous, donnant leur composition en % des acides gras et leurs triglycérides 2-monoinsaturés en % des triglycérides, ces graisses contiennent une quantité d'acides linoléique et oléique et corrélativement une teneur en monosaturés-diinsaturés plus élevée que le beurre de cacao. Le fractionnement décrit ci-après diminue la teneur en ces triglycérides de la fraction concrète ($C_1$) en rapprochant ses propriétés physico-chimiques de celles du beurre de cacao et en la rendant compatible avec celui-ci.

Tableau I

|  | Mangue | Sal | Mowrah | Kokum |
|---|---|---|---|---|
| Acide palmitique | 8-9 | 6-7 | 16-24 | 2-3 |
| " stéarique | 40-42 | 42-44 | 20-25 | 52-58 |
| " oléique | 40-42 | 38-42 | 43-45 | 38-40 |

3

Tableau I (Suite)

| | Mangue | Sal | Mowrah | Kokum |
|---|---|---|---|---|
| Acide linoléique | 5-8 | 4-7 | 9-14 | 2-3 |
| 2-monoinsaturés | 46-50 | 64-79 | 26-30 | 73-78 |

Le cycle de fractionnement comprend les étapes suivantes :

1a) On chauffe la matière grasse raffinée de manière à la mettre entièrement sous forme liquide, à une température de 60 à 80 °C selon la matière grasse mise en œuvre, par exemple environ 60 °C pour la graisse de sal et environ 70 °C pour la graisse de mangue.

1b) On refroidit la graisse liquide à une température supérieure de 5 à 10 °C à celle de solidification, c'est-à-dire en général à 30-45 °C.

1c) On ensemence la graisse liquide refroidie avec des cristaux stabilisés de forme β de manière à diriger la cristallisation vers la formation d'une fraction concrète ($C_1$) de haut point de fusion ou stéarine. Les cristaux de forme β sont composés essentiellement de triglycérides d'acides gras saturés. Ceux-ci constituent la forme polymorphe stable à plus haut point ou zone de fusion de ces triglycérides. Les premiers cristaux d'ensemencement peuvent être obtenus par simple cristallisation à 30-35 °C de la graisse fondue et filtration.

Une fois la fabrication mise en route, on peut utiliser pour l'ensemencement d'une charge des cristaux de forme β provenant de la stéarine ($C_1$) obtenue lors du fractionnement d'une charge précédente. Ces cristaux de forme β peuvent provenir du beurre de cacao ou de préférence de la matière grasse fractionnée. Le fractionnement peut avoir été opéré à sec ou à l'aide d'un solvant, ce dernier ayant été ensuite éliminé. Quelle que soit leur provenance les cristaux β ont été entreposés pendant au moins 4 semaines à 30-35 °C. Les cristaux sont ajoutés à raison de 0,05 à 0,2 % en poids tels quels ou sous forme d'une suspension à 5-15 % en poids dans la fraction fluide correspondante ($F_1$). On agite la suspension lentement de manière à bien mélanger les cristaux.

1d) On refroidit la suspension de l'étape 1c) progressivement à raison de 0,5 à 1,5 °C/heure et de préférence de 1 °C/heure de manière à faciliter la formation de gros cristaux, jusqu'à la température de fractionnement qui est de préférence de 20 à 35 °C. On peut en variante laisser la suspension pendant 8 à 15 heures au repos à la température d'ensemencement et ensuite refroidir la suspension dans les conditions indiquées ci-dessus. On peut également refroidir la suspension comme indiqué ci-dessus et la laisser ensuite au repos 8 à 15 heures à la température de fractionnement. La même opération peut avoir lieu à une température intermédiaire en interrompant le refroidissement. On effectue la cristallisation dans des cuves ou dans des plateaux.

1e) On réalise le fractionnement au moyen d'une presse hydraulique, par exemple à cage. Pour ce faire, on transfère la suspension de l'étape 1d) qui a acquis une consistance pâteuse due aux agrégats de cristaux dans des toiles ou « scourtins » qu'on dispose en empilements, chaque scourtin étant séparé des scourtins voisins par des plaques métalliques munies de rigoles de drainage. En variante, on peut utiliser une presse automatique semi-continue du type de celles utilisées pour séparer le beurre de cacao de la pâte aménagée convenablement par exemple en remplaçant les filtres métalliques par des toiles dont les mailles ont au plus 2 µm.

Dans cette étape, la pression doit être appliquée par paliers en augmentant progressivement et atteindre une valeur d'au moins 29,4 bar (30 kg/cm²) pour obtenir une expulsion aussi complète que possible de la fraction fluide. On augmente la pression par paliers d'environ 5,9-6,9 bar (6-7 kg/cm²) en maintenant la pression appliquée pendant au moins 5 min. jusqu'à au moins 29,4 bar (30 kg/cm²), par exemple jusqu'à 44 bar (45 kg/cm²), et on maintient la pression maximum pendant 1 h à 2 h 30, l'opération durant 1 h 30 à 3 h au total.

· Suivant la composition de la matière grasse mise en œuvre, la fraction concrète ($C_1$) obtenue représente 10 à 90 % en poids de la graisse de départ et son indice d'iode est 18 à 50. L'indice d'iode est fonction du degré d'insaturation des acides gras contenus dans les triglycérides : c'est le nombre de grammes d'iode fixés par 100 g de corps gras. Dans le cas présent il indique le degré de séparation de la fraction concrète de la fraction fluide. La fraction fluide ($F_1$) ou oléine a un indice d'iode de 45 à 70.

La fraction fluide ($F_1$) peut être utilisée en alimentation telle quelle ou après une légère hydrogénation, par exemple comme huile de table.

Selon le schéma 2

Cette variante comprenant deux cycles de fractionnement successifs convient plus particulièrement à l'huile de palme qui possède une teneur comparativement plus élevée en triglycérides trisaturés à haute zone de fusion. Le tableau II ci-dessous donne sa composition en % des acides gras ainsi que le nombre des triglycérides 2-monoinsaturés et trisaturés en % des triglycérides.

Tableau II

| | |
|---|---:|
| Acide palmitique | 41-59 |
| Acide stéarique | 4-6 |
| Acide oléique | 27-53 |
| Acide linoléique | 5-10 |
| 2-monoinsaturés | 40-45 |
| Trisaturés | 6-9 |

Le fractionnement de l'étape 1e) du premier cycle (selon le schéma 1) permet dans ce cas de séparer une fraction concrète ($C_1$) dont l'indice d'iode est 18-24 avec un rendement de 10 à 12 % en poids. Celle-ci a une zone de fusion de 45 à 55 °C. Cette fraction ($C_1$) peut être utilisée pour durcir des graisses de pâtisserie (« shortenings ») ou des margarines ou encore entrer dans la composition de produits cosmétiques ou pharmaceutiques. La fraction fluide ($F_1$) subit un second cycle de fractionnement dans les conditions suivantes :

2a) La fraction fluide ($F_1$) d'indice d'iode supérieur à 55 et de préférence 56 à 56,5 représente 90 à 93 % en poids de la matière grasse de départ. On chauffe celle-ci à une température de 40 à 60 °C et de préférence à environ 45 °C de manière à la mettre entièrement sous forme liquide.

2b) On refroidit le liquide de l'étape 2a) jusqu'à une température d'environ 30 °C, qui est de 3 à 5 °C supérieure à la température de solidification de cette fraction ($F_1$).

2c) On l'ensemence avec des cristaux stabilisés de forme β' pour diriger la cristallisation vers la formation d'une fraction concrète ($C_2$) désirée intermédiaire. Les cristaux de forme β' sont constitués essentiellement de triglycérides 2-monoinsaturés, qui peuvent être obtenus par cristallisation d'une fraction ($F_1$) portée à environ 45 °C et refroidie à une température de 20 à 30 °C et filtration. La fabrication étant en route, on utilisera de préférence pour l'ensemencement d'une charge des cristaux de forme β' provenant d'une fraction ($C_2$) d'une charge précédente.

Ces cristaux ont été stabilisés par entreposage pendant au moins 4 semaines à 20-30 °C. Ils sont ajoutés tels quels à raison de 0,05 + 0,2 % en poids ou sous forme d'une suspension à 5-15 % en poids dans la fraction fluide correspondante ($F_2$) sous agitation lente.

2d) On refroidit progressivement la suspension de l'étape 2c) à raison de 0,5 à 1,5 °C/heure et de préférence de 1 °C/heure jusqu'à 15-20 °C, de préférence après l'avoir laissée au repos pendant 8 à 15 h à la température d'ensemencement.

On laisse ensuite la suspension au repos à 15-20 °C, et de préférence à 15-18 °C, pendant 72-120 heures, tout en maintenant la température de manière à poursuivre la cristallisation.

2e) On filtre la suspension comme indiqué ci-dessus en liaison avec le schéma 1 dans les conditions particulières suivantes : on augmente progressivement la pression par paliers de 5,9-6,9 bar (6-7 kg/cm²), la durée d'un palier étant au moins 5 min. et de préférence 10 à 15 min. La pression maximum est au moins 29,4 bar (30 kg/cm²) et de préférence 44 bar (45 kg/cm²) et on maintient cette pression pendant au moins 1 h. et de préférence pendant environ 2 h.

Dans le cas présent il faut veiller à ce que la température n'excède pas 18 °C, en particulier au début du fractionnement. En effet, un réchauffement excessif durant le pressage peut faire fondre en partie les cristaux, ce qui entraîne une diminution du rendement et favorise l'apparition ultérieure de formes cristallines indésirables.

On obtient ainsi une fraction concrète ($C_2$) de caractéristiques physico-chimiques très voisines de celles du beurre de cacao, dont l'indice d'iode est 36-38, avec un rendement global d'environ 30 % en poids par rapport à la matière grasse mise en œuvre et une fraction fluide ($F_2$) dont l'indice d'iode est 65-68.

Selon un mode de réalisation préféré, il est possible d'améliorer le rendement global en fraction concrète ($C_2$) à 33 % en laissant cristalliser la fraction fluide ($F_2$) pendant 2 à 3 jours à environ 15 °C en récupérant une fraction concrète ($C_3$) par pressage dans les conditions appliquées à la fraction ($F_2$), fraction ($C_3$) qu'on peut ajouter à la charge suivante ($F_1$) à l'étape 2e).

La fraction concrète ($C_2$) fond à la température du corps et par suite trouve de nombreuses applications en confiserie et en biscuiterie en remplacement du beurre de cacao, en cosmétique, par exemple comme base de crème, de lotion ou de bâton à lèvres et en pharmacie comme support de médicament, par exemple comme suppositoire. En chocolaterie elle peut être utilisée seule ou être associée à un suif végétal dans une composition grasse destinée à remplacer le beurre de cacao. Dans une telle composition grasse le suif végétal sera de préférence sous forme d'une ou plusieurs fraction(s) concrète(s) ($C_1$), par exemple de graisse de sal ou de mangue. La ou les fractions(s) concrète(s) ($C_1$) représenteront avantageusement 10 à 60 %, par exemple 50 % en poids de la composition.

La fraction fluide ($F_2$) convient comme huile de table, spécialement comme huile de friture.

Les exemples suivants, dans lesquels les pourcentages sont pondéraux. illustrent l'invention. Dans ceux-ci I.V. est l'indice d'iode déterminé par titration au thiosulfate de sodium de l'iode libéré par l'addition d'iodure de potassium dans une solution contenant la matière grasse et du chlorure d'iode

5

(réactif) par comparaison avec une solution de référence du réactif sans la matière grasse (méthode 2.205, I.U.P.A.C. « Standard methods for the analysis of oils, fats and derivatives, Pergamon Press, 6th edition 1979 »).

Dans l'exemple comparatif ci-après, on a effectué le bilan des I.V. : cette opération consiste à comparer l'I.V. de la matière grasse de départ à la somme pondérée des I.V. de la fraction concrète (C) et de la fraction fluide (F) obtenue soit :

I.V. = I.V.$_C$. xC + I.V.$_F$. xF, C et F étant respectivement les pourcentages de fraction concrète et de fraction fluide obtenus par le fractionnement.

L'aptitude d'une fraction concrète (C$_1$) ou (C$_2$) à être mélangée au beurre de cacao est vérifiée :

— Par l'étude de son comportement au refroidissement donnant son point de solidification dans des conditions bien déterminées (méthode de Shukoff, température de référence 0 °C, I.U.P.A.C., méthode 2.132).

— Par la détermination de sa courbe de fusion donnant l'indice de graisse solide (S.F.I.), ou pourcentage de graisse solide existant dans le corps gras partiellement fondu à une température donnée, par R.M.N. (résonance magnétique nucléaire du proton) pulsée (I.U.P.A.C., 1$^{er}$ supplément 1982, méthode 2.323) ou par dilatométrie (I.U.P.A.C., 6$^e$ édition, 1979, méthode 2.141).

— Par son application dans des chocolats conjointement au beurre de cacao, seule ou en mélange avec une autre fraction concrète.

Dans l'exemple comparatif ci-après, on indique les rendements et I.V. obtenus pour la fraction (C$_2$) de l'huile de palme selon la présente invention (A) par comparaison avec le fractionnement par l'hexane (B), respectivement l'acétone (C), de l'huile de palme dans les conditions suivantes :

(B) On chauffe la fraction fluide (F$_1$) provenant du fractionnement selon le schéma 2 ci-dessus à 45 °C et on la dissout dans l'hexane dans un rapport pondéral hexane/oléine de 3 :1, puis on refroidit la solution à —10 °C et on laisse cristalliser à — 10 °C pendant 24 h, on brasse la suspension 4 h avant la séparation des cristaux pendant 5 minutes à la vitesse de 3-4 tours/minute et on filtre les cristaux avec un filtre à cadre. On recueille les cristaux, on les fait fondre et on évapore le solvant.

(C) On procède comme en (B) ci-dessus sauf qu'on utilise un rapport pondéral acétone/fraction fluide (F$_1$) de 6 : 1 et qu'on laisse cristalliser la suspension pendant 24 h à 5 °C.

Dans les cas d'utilisation de solvants ci-dessus (B) et (C), la séparation des cristaux peut se faire dans tout équipement utilisable pour la séparation liquide/solide sans application de la pression par exemple dans un filtre ou un séparateur centrifuge.

Exemple 1

Préparation de l'oléine de palme (F$_1$)

On chauffe 100 kg d'huile de palme démucilaginée et neutralisée (contenant au plus 0,1 % d'acides gras libres) d'I.V. 53 jusqu'à 60 °C puis on refroidit à 45 °C.

On ensemence l'huile à 45 °C avec 100 g (0,1 %) de cristaux de forme β de fraction concrète (stéarine) de palme préparés comme indiqué ci-après, puis après avoir transféré la suspension dans une cuve on la refroidit progressivement jusqu'à 30 °C en 12 h. On filtre la suspension des cristaux formés au moyen d'une presse à cadres. Le cycle de pression employé est de 2 h à 30 °C, la pression maximum de 30 kg/cm$^2$ étant atteinte en 35 min. par paliers de 7 min. On recueille 90 kg de fraction fluide claire (oléine F$_1$) dont l'indice d'iode est 56-56,5 et 10 kg d'une fraction concrète (stéarine C$_1$) d'indice d'iode 22-24 représentant 10 % de l'huile mise en œuvre. L'indice d'iode de la stéarine (C$_1$) dépend de l'efficacité de la séparation : ainsi, un indice d'iode bas montrera un bon rendement de la séparation. Un indice d'iode précis pour l'oléine (F$_1$) indiquera simplement une orientation de la cristallisation sans préjuger du rendement.

Préparation de la fraction concrète (C$_2$)

On chauffe 90 kg de la fraction (F$_1$) précédente à 45 °C et on l'ensemence avec 90 g (0,1 %) de cristaux stabilisés de forme β' (fraction C$_2$) préparés comme indiqué ci-après, puis après avoir mélangé les cristaux au liquide, on laisse refroidir la suspension pendant 10 h jusqu'à 26-27 °C. On la transfère ensuite dans des plateaux par charges de 25 kg à cette température, on refroidit jusqu'à 18 °C en 8 h on laisse cristalliser à 18 °C pendant 4 jours en prenant garde que la température dans les plateaux reste entre 17 et 19 °C.

On transfère ensuite la suspension dans des scourtins qu'on empile dans une presse hydraulique et on soumet l'ensemble à une pression augmentant progressivement par paliers de 6-7 kg/cm$^2$ par 15 minutes jusqu'en 20 kg/cm$^2$, c'est-à-dire en 45 min., ce qui correspond à une diminution de la charge d'environ 30 %. La durée de la montée en pression dépend naturellement du type de la presse et de sa géométrie. On augmente ensuite la pression progressivement par paliers de 6-7 kg/cm$^2$ par 15 minutes jusqu'à 45 kg/cm$^2$, c'est-à-dire en 1 h et on poursuit le pressage à cette pression pendant 2 h. On obtient une fraction concrète (C$_2$) d'I.V. 36-38 avec un rendement de 30 % et une fraction fluide (F$_2$) d'I.V. 65-67.

Préparation des cristaux de forme β et β' de stéarine de palme

On prépare les cristaux d'ensemencement de forme β en tempérant l'huile de palme à 30-35 °C pendant 2 semaines. On sépare les cristaux formés par filtration et on les laisse reposer à 30-35 °C pendant 2 semaines.

Pour préparer les cristaux d'ensemencement de forme β', on tempère la fraction fluide (F$_1$) à 20-28 °C pendant 2 semaines. On sépare les cristaux formés par filtration et on les laisse reposer à 20-28 °C pendant 2 semaines.

Lorsque la fabrication est en route, on peut prélever une partie de la fraction stéarine (C$_1$), respectivement (C$_2$) des charges suivantes et la tempérer comme indiqué ci-dessus pendant au moins 2 semaines de manière à récolter des cristaux de forme β, respectivement β' stabilisés et on laisse reposer les cristaux pendant 2 semaines.

## Exemple comparatif

On fractionne une huile de palme raffinée d'I.V. 53 par les procédés :

(A) De l'exemple 1.
(B) Comme indiqué précédemment, la dernière étape utilisant l'hexane.
(C) Comme indiqué précédemment, la dernière étape utilisant l'acétone.
(D) Selon l'exemple 3 de la demande de brevet allemand No 2 916 604.

Les rendements (rdt) par rapport à la matière grasse mise en œuvre et les I.V. des différentes fractions sont indiqués dans le tableau III ci-dessous :

(Voir tableau III page 8.)

Tableau III

| | A | | B | | C | | D | |
|---|---|---|---|---|---|---|---|---|
| | I.V. | rdt % | I.V. | rdt % | I.V. | rdt % | I.V. | rdt % |
| Huile de palme de départ | 53 | | 53 | | 53 | | 53 | |
| 1er pressage | | | | | | | | |
| ou filtration pour D | | | | | | | | |
| Stéarine ($C_1$) | 22–24 | 10 | 22–24 | 10 | 22–24 | 10 | $31^1$ | 16,7 |
| Oléine ($F_1$) | 56,5 | | 56,5 | | 56,5 | | $58^2$ | |
| 2ème pressage | | | | | | | | |
| ou filtration pour B, C et D | | | | | | | | |
| Stéarine ($C_2$) | 36–38 | 33 | 38–40 | 35 | 36 | 40 | $33^3$ | 52 |
| Oléine ($F_2$) | 65–67 | | 68 | | 70 | | $60^3$ | 48 |
| Rendement global | | $30^4$ | | 32 | | 36 | | 43 |

0 139 177

Légende

1. L'I.V. de la stéarine (C$_1$) est trop élevé et montre qu'il y a encore une certaine quantité d'oléine (F$_1$) incluse due à la mauvaise séparation.

2. Si l'on se base sur les rendements indiqués, le bilan des I.V. donne un I.V. de 58 pour l'oléine (F$_1$).

3. Si l'on se base sur les I.V. indiqués, le bilan des I.V. donne :

$58 = 33 \cdot C + 60 \cdot F$ avec $C + F = 1$, soit $C = 0,07$

En réalité on obtient seulement 7 % de stéarine (C$_2$) ayant un indice d'iode de 33.

4. Le rendement global peut être augmenté à 33 % si on laisse cristalliser l'oléine (F$_2$) pendant 2 à 3 jours à 15 °C. On récupère ainsi par pressage, dans les conditions indiquées dans l'exemple 1 en liaison avec la préparation de la fraction concrète (C$_2$), une fraction concrète (C$_3$) (I.V. 52-53, rendement 15 %) et une fraction fluide (F$_3$), (I.V. 67-68, rendement 85 %) et la fraction (C$_3$) peut être ajoutée à la charge suivante (F$_1$).

Le tableau IV ci-dessous donne les valeurs S.F.I. et Shukoff des fractions concrètes (C$_2$) obtenues par les procédés A, B et C comparées à celles obtenues pour le beurre de cacao.

Tableau IV

| | Fraction concrète (C$_2$) selon A | Fraction concrète (C$_2$) selon B | Fraction concrète (C$_2$) selon C | Beurre de cacao |
|---|---|---|---|---|
| I.V. | 38 | 38–40 | 36 | 36 |
| S.F.I. (%) à température (°C) 25 | 54 | 52 | 62 | 63 |
| 30 | 32 | 25 | 36 | 41 |
| 35 | 5 | 2 | 5 | 0 |
| 40 | 0 | 0 | 0 | |
| Courbe de refroidissement selon Shukoff (0°C) | | | | |
| Température minimum (°C) en temps (min) | 18,0   27 | 14,7   37 | 18,4   30 | 17,7   39 |
| Température maximum (°C) en temps (min) | 20,6   50 | 18,3   70 | 22,1   52 | 20,6   60 |
| Δ température (°C) | 2,6 | 3,6 | 3,7 | 2,9 |
| Δ temps (min) | 23 | 33 | 22 | 21 |
| Δ température/Δ temps (°C/min) | 0,11 | 0,11 | 0,17 | 0,14 |

0 139 177

## Exemples 2-3

Pour ces exemples, les valeurs analytiques (S.F.I., rendement, I.V. courbe de refroidissement Shukoff) sont indiquées dans le tableau V ci-dessous.

2. On chauffe 100 kg de graisse de sal raffinée à 60 °C puis, après l'avoir refroidie à 30 °C, on l'ensemence avec 1 kg d'une suspension contenant 10 % de cristaux de forme β de stéarine de sal dans l'oléine de sal liquide, ces cristaux ayant été stabilisés comme indiqué dans l'exemple 1. On laisse reposer la suspension obtenue 12 h. à 30 °C et on la refroidit à 26 °C en 4 h. On fractionne la suspension en 2 h. comme indiqué dans l'exemple 1 en liaison avec la préparation de la fraction ($F_1$), sauf que l'opération a lieu à 26 °C et la pression maximum est de 35 kg/cm². On obtient 80 kg d'une fraction concrète ($C_1$).

3. On chauffe 1 kg de graisse de noyau de mangue raffinée à 68 °C, on refroidit à 30 °C et on ensemence avec 1 g (0,1 %) de cristaux de forme β de stéarine de mangue stabilisés comme indiqué à l'exemple 1. On laisse refroidir la suspension jusqu'à 23 °C pendant 5 h., puis on la maintient 15 h. à 23 °C. On fractionne la suspension en 2 h. comme indiqué dans l'exemple 1 en liaison avec la préparation de la fraction ($F_1$), sauf que l'opération a lieu à 23 °C et la pression maximum est de 36,5 kg/cm². On obtient 670 g d'une fraction concrète ($C_1$).

Tableau V

| Exemple | 2 | 3 |
|---|---|---|
| S.F.I. à 25 (°C) | 74 | 45 |
| 30 | 69 | 37 |
| 35 | 41 | 9 |
| 40 | 0 | 0 |
| Rendement en stéarine (%) | 78 | 70 |
| I.V. stéarine | 33 | 42 |
| oléine | 45 | 61 |
| Courbe de refroidissement Shukoff (0°C) | | |
| Température (°C) minimum en temps (min) | 18,8   43. | 18,0   32 |
| Température (°C) maximum en temps (min) | 25,1   51 | 26,4   44 |
| Δ température (°C) | 6,3 | 8,4 |
| Δ temps (min) | 18 | 12 |
| Δ température/Δ temps (°C/min) | 0,35 | 0,7 |

## Exemple 4

On fabrique 4 masses de chocolat à partir des ingrédients ci-dessous dans les proportions indiquées. La graisse étrangère est constituée de : 100 % de fraction concrète ($C_2$) de l'exemple 1 (I) ; 10 % de fraction concrète ($C_1$) de l'exemple 2/90 % de fraction concrète ($C_2$) de l'exemple 1 (II) et 40 % de fraction concrète ($C_1$) de l'exemple 2/60 % de fraction concrète ($C_2$) de l'exemple 1 (III).

| Ingrédient, % en poids | Chocolat au lait | Chocolat noir |
|---|---|---|
| Sucre | 43,3 | 48,7 |
| Grué (Ghana) | 12,0 | 45,2 |
| Poudre de lait (26 % de matière grasse sur matière sèche) | 27,5 | - |
| Poudre de cacao (12-14 % de beurre de cacao sur matière sèche) | - | 0,7 |
| Beurre de cacao désodorisé | 11,8 | - |
| Graisse étrangère (correspond à environ 16-18 % de la matière grasse totale) | 5,0 | 5,0 |
| Lécithine | 0,4 | 0,4 |
| Traces de vanilline | - | - |

On mélange à 40 °C les différents ingrédients à l'exception de la lécithine, de la vanilline et d'une partie de la matière grasse, de sorte que le mélange contienne 27 à 29 % en poids de matière grasse et on le broie finement dans une broyeuse à cylindres. On conche la masse broyée pendant 24 h à 55 °C en y ajoutant le reste de la matière grasse par portions. On ajoute la vanilline puis la lécithine peu avant la fin du conchage. Après le conchage, on refroidit le chocolat au lait à 27 °C et le chocolat noir à 29 °C et on les tempère à 29 °C, respectivement 30-31 °C.

On évalue la comptabilité de la matière grasse étrangère avec le beurre de cacao au moyen des tests suivants :

Aptitude au démoulage

On remplit des moules métalliques avec 100 g du chocolat tempéré qu'on place dans une enceinte réfrigérée à 4 °C.

Après environ 5 min on retourne les moules, on les vibre et on note le temps (min) au bout duquel le chocolat se sépare du moule.

Blanchiment gras

Le blanchiment gras est l'apparition d'une couche blanchâtre de graisse à la surface du chocolat. Ce phénomène indésirable se manifeste d'autant plus facilement que la graisse étrangère interagit avec le beurre de cacao. C'est donc une bonne indication de sa compatibilité. On applique au chocolat 30 cycles de tempérage comprenant 12 h à 15 °C, puis 12 h à 28 °C et de nouveau 12 h à 15 °C et on note les résultats obtenus sur une échelle de 1 à 5 comme suit :
Degré 1 : pas de changement (aspect brillant)
Degré 2 : légèrement voilé
Degré 3 : voilé
Degré 4 : blanchiment
Degré 5 : fort blanchiment
On note également le nombre de cycles de tempérage après lequel le degré change d'une unité. 1/18, 2/6, 3/6 par exemple signifie qu'après 18 cycles l'échantillon est classé 2, après 6 cycles supplémentaires il passe à 3 et qu'il reste à 3 après 30 cycles.

Les résultats sont consignés dans le tableau VI ci-dessous :

Tableau VI

| Echantillon | Chocolat | | | |
|---|---|---|---|---|
| | au lait | | noir | |
| | Blanchiment gras | Temps de démoulage (min) | Blanchiment gras | Temps de démoulage (min) |
| I | 1/30 | 26,5 | 1/24; 3/6 | 19,3 |
| II | 1/30 | 31,3 | 1/24; 3/6 | 21,6 |
| III | 1/30 | 27,9 | 1/18; 2/6; 3/6 | 20,6 |
| Beurre de cacao | 1/30 | 25 | 1/20; 2/4; 3/6 | 20 |

**Revendications**

1. Procédé de fractionnement à sec d'une matière grasse végétale, notamment la graisse de mangue ou de sal, pouvant cristalliser sous plusieurs formes autour de la température ambiante en vue d'obtenir une fraction concrète compatible avec le beurre de cacao, caractérisé par les étapes suivantes :

a) on chauffe la matière grasse pré-raffinée de manière à la mettre entièrement sous forme liquide,

b) on refroidit le liquide de l'étape a) jusqu'à une température de 3 à 10 °C au-dessus de sa température de solidification,

c) on l'ensemence avec 0,05 à 0,2 % en poids de cristaux de forme β obtenus à partir de ladite matière grasse ou du beurre de cacao et stabilisés sous la forme désirée par entreposage pendant au moins 4 semaines à 30-35 °C,

d) on refroidit la suspension de l'étape c) progressivement à raison de 0,5 à 1,5 °C/heure jusqu'à une température de fractionnement comprise entre 15 et 35 °C et

e) on filtre la suspension de l'étape d) tout en maintenant la température de fractionnement, sous une pression augmentant progressivement par paliers d'environ 5,9-6,9 bar (6-7 kg/cm$^2$), en maintenant la pression appliquée pendant au moins 5 min jusqu'à une pression maximum d'au moins 29,4 bar (30 kg/cm$^2$), on maintient la pression maximum pendant au moins 1 h et on recueille une fraction concrète ($C_1$) dont l'indice d'iode est au maximum 50 et une fraction fluide ($F_1$) d'indice d'iode supérieur à celui de la fraction concrète ($C_1$), la différence entre l'indice d'iode de la fraction ($C_1$) et celui de la fraction ($F_1$) étant au moins 10.

2. Procédé selon la revendication 1, caractérisé par le fait que dans l'étape d) on laisse la suspension au repos pendant 8 à 15 heures à la température d'ensemencement, à la température de fractionnement ou à une température intermédiaire.

3. Procédé selon la revendication 1 comprenant deux cycles de fractionnements successifs, caractérisé par le fait que la matière grasse mise en œuvre est l'huile de palme, que dans l'étape c) du premier cycle de fractionnement on ensemence le liquide avec des cristaux stabilisés de forme β et que le second cycle de fractionnement comprend les étapes suivantes appliquées à la fraction ($F_1$) :

2a) on chauffe la fraction fluide ($F_1$) dont l'indice d'iode est supérieur à 55 jusqu'à une température de 40 à 60 °C de manière à la mettre entièrement sous forme liquide,

2b) on refroidit le liquide de l'étape 2a) ci-dessus jusqu'à une température de 3 à 5 °C au-dessus de sa température de solidification,

2c) on l'ensemence avec des cristaux stabilisés de forme β' d'huile de palme obtenus par entreposage pendant au moins 4 semaines à 20-30 °C,

2d) on refroidit la suspension de l'étape 2c) ci-dessus progressivement à raison de 0,5 à 1,5 °C/heure jusqu'à une température de 15 à 20 °C et on la laisse reposer à cette température pendant 72 à 120 heures tout en maintenant la température de manière à poursuivre la cristallisation,

2e) on filtre la suspension de l'étape 2d) sous une pression augmentant progressivement par paliers d'environ 5,9-6,9 bar (6-7 kg/cm$^2$) en maintenant la pression appliquée pendant au moins 5 min jusqu'à une pression maximum d'au moins 29,4 bar (30 kg/cm$^2$), on maintient la pression maximum pendant au moins 1 h et on recueille une fraction concrète ($C_2$) dont l'indice d'iode est 36-38 qui constitue la fraction concrète désirée et une fraction fluide ($F_2$) dont l'indice d'iode est 65-68.

4. Procédé selon la revendication 3, caractérisé par le fait que dans l'étape c) du premier cycle de fractionnement on ensemence le liquide avec 0,05 à 0,2 % en poids de cristaux stabilisés de forme β d'huile de palme et que dans l'étape 2c) du second cycle de fractionnement, on ensemence le liquide avec 0,05 à 0,2 % en poids de cristaux stabilisés de forme β' d'huile de palme.

5. Procédé selon la revendication 3, caractérisé par le fait que dans l'étape 2d) du second cycle de fractionnement on laisse la suspension au repos pendant 8 à 15 heures à la température d'ensemencement préalablement à son refroidissement.

6. Procédé selon la revendication 3, caractérisé par le fait qu'on laisse cristalliser la fraction fluide $(F_2)$ pendant 2 à 3 jours à environ 15 °C, qu'on filtre la suspension obtenue dans les conditions de fractionnement de l'étape 2e) du second cycle de fractionnement et qu'on recueille une fraction concrète $(C_3)$ qu'on ajoute à la suspension de l'étape 2d) lors d'un second cycle de fractionnement appliqué à une charge ultérieure et une fraction fluide $(F_3)$.

7. Utilisation des fractions concrètes obtenues par la mise en œuvre du procédé selon l'une des revendications 1 à 6 dans une composition grasse utilisable en confiserie/chocolaterie comme substitut du beurre de cacao.

8. Utilisation des fractions fluides obtenues par la mise en œuvre du procédé selon l'une des revendications 1 à 6 dans une huile de table ou de friture.

## Claims

1. A process for the dry fractionation of a vegetable fat, particularly mango kernel or sal butter, capable of crystallizing in several forms at temperatures around ambient temperature with a view to obtaining a concrete fraction compatible with cocoa butter, characterized the following steps :

a) the pre-refined fat is heated to convert it entirely into liquid form,

b) the liquid of step (a) is cooled to a temperature 3 to 10 °C above its solidification temperature,

c) it is then seeded with 0.05 to 0.2 % by weight of β crystals obtained from said fat or from cocoa butter and stabilized in the required form by storage during at least 4 weeks at 30-35 °C,

d) the suspension of step (c) is progressively cooled at a rate of 0.5 to 1.5 °C per hour to a fractionation temperature in the range from 15 to 35 °C and

e) the suspension of step (d) is filtered at the fractionation temperature under a pressure increasing progressively in stages of approximately 5.9-6.9 bar (6-7 kg/cm$^2$), the pressure applied being maintained for at least 5 min., to a maximum pressure of at least 29.4 bar (30 kg/cm$^2$), the maximum pressure is maintained for at least 1 hour and a concrete fraction $(C_1)$ having an iodine value of at most 50 and a fluid fraction $(F_1)$ having a higher iodine value than the concrete fraction $(C_1)$ are collected, the difference between the iodine value of the fraction $(C_1)$ and that of the fraction $(F_1)$ being at least 10.

2. A process as claimed in Claim 1, characterized in that, in step d) the suspension is left standing for 8 to 15 hours at the seeding temperature, at the fractionation temperature or at an intermediate temperature.

3. A process as claimed in Claim 1 comprising two successive fractionation cycles, characterized in that the fat used is palm oil, in that in step c) of the first fractionation cycle the liquid is seeded with stabilized β crystals and in that the second fractionation cycle comprises the following steps applied to the fraction $(F_1)$ :

2a) the fluid fraction $(F_1)$ having an iodine value of greater than 55 is heated to a temperature of from 40 to 60 °C to convert it completely into liquid form,

2b) the liquid of step 2a) above is cooled to a temperature 3 to 5 °C above its solidification temperature,

2c) the cooled liquid is seeded with stabilized β' crystals of palm oil obtained by storage for at least 4 weeks at 20-30 °C,

2d) the suspension of step 2c) above is progressively cooled at a rate of 0.5 to 1.5 °C/hour to a temperature of 15 to 20 °C and left standing at that temperature for 72 to 120 hours so that crystallization may continue,

2e) the suspension of step 2d) is filtered under a pressure increasing progressively in stages of approximately 5.9-6.9 bar (6-7 kg/cm$^2$), the pressure applied being maintained for at least 5 minutes, to a maximum pressure of at least 29.4 bar (30 kg/cm$^2$), the maximum pressure is maintained for at least 1 hour and a concrete fraction $(C_2)$ having an iodine value of 36-38, which represents the desired concrete fraction, and a fluid fraction $(F_2)$ having an iodine value of 65-68 are collected.

4. A process as claimed in Claim 3, characterized in that, in step c) of the first fractionation cycle, the liquid is seeded with from 0.05 to 0.2 % by weight of stabilized β crystals of palm oil and in that, in step 2c) of the second fractionation cycle, the liquid is seeded with from 0.05 to 0.2 % by weight of stabilized β' crystals of palm oil.

5. A process as claimed in Claim 3, characterized in that, in step 2d) of the second fractionation cycle, the suspension is left standing for 8-15 hours at the seeding temperature before it is cooled.

6. A process as claimed in Claim 3, characterized in that the fluid fraction $(F_2)$ is left to crystallize for 2 to 3 days at approximately 15 °C, in that the suspension obtained is filtered under the fractionation conditions of step 2e) of the second fractionation cycle and in that a concrete fraction ($C_3$), which is added to the suspension of step 2d) during a second fractionation cycle applied to a subsequent batch, and a fluid fraction ($F_3$) are collected.

7. The use of the concrete fractions obtained by working out the process as claimed in anyone of claims 1 to 6 in a fatty composition for use in confectionery/chocolate manufacture as a cocoa butter substitute.

8. The use of the fluid fractions obtained by working out the process as claimed in anyone of claims 1 to 6 in a table or frying oil.

**Patentansprüche**

1. Verfahren zur Trockenfraktionierung eines Pflanzenfetts, insbesondere von Mango- oder Salfett, das in der Nähe der Raumtemperatur in verschiedenen Formen kristallisieren kann, mit dem Ziel der Gewinnung einer festen Fraktion, die mit Kakaobutter kompatibel, ist, gekennzeichnet durch die folgenden Schritte :

a) man erwärmt das vorraffinierte Pflanzenfett so, daß man es vollständig in die flüssige Form überführt,

b) man kühlt die Flüssigkeit aus Stufe a) bis auf eine Temperatur ab, die 3 bis 10 °C über der Erstarrungstemperatur liegt,

c) man impft mit 0,05 bis 0,2 Gew.-% von Kristallen in der β-Form an, die aus dem obigen Fett oder aus Kakaobutter erhalten wurden und in der gewünschten Form durch Lagerung für wenigstens 4 Wochen bei 30 bis 35 °C stabilisiert wurden,

d) man kühlt die Suspension aus Stufe c) allmählich mit einer Geschwindigkeit von 0,5 bis 1,5 °C/h bis auf eine Fraktioniertemperatur im Bereich von 15 bis 35 °C ab und

e) man filtriert die Suspension aus Stufe d), wobei man die Fraktioniertemperatur aufrechterhält, bei einem allmählich stufenweise von etwa 5,9 bis 6,9 bar (6-7 kg/cm$^2$) zunehmenden Druck, wobei man den angewandten Druck für wenigstens 5 min aufrechterhält, bis zum Erreichen eines Maximaldrucks von wenigstens 29,4 bar (30 kg/cm$^3$), hält den Maximaldruck wenigstens 1 h aufrecht und sammelt eine feste Fraktion ($C_1$) deren Jodzahl höchstens 50 beträgt, und eine flüssige Fraktion ($F_1$) mit einer höheren Jodzahl als die feste Fraktion ($C_1$), wobei der Unterschied zwischen der Jodzahl der Fraktion ($C_1$) und der der Fraktion ($F_1$) wenigstens 10 beträgt.

2. Verfahren nach Anspruch 1, dadurch gekennzeichnet, daß man in Stufe d) die Suspension 8 bis 15 h bei der Animpftemperatur, bei der Fraktioniertemperatur oder bei einer dazwischenliegenden Temperatur ruhig hält.

3. Verfahren nach Anspruch 1 mit zwei aufeinanderfolgenden Fraktionierzyklen, dadurch gekennzeichnet, daß das eingesetzte Fett Palmöl ist, daß man in Stufe c) des ersten Fraktionierzyklus die Flüssigkeit mit stabilisierten Kristallen in der β-Form animpft und daß man mit der Fraktion ($F_1$) im zweiten Fraktionierzyklus die folgenden Schritte durchführt :

2a) man erwärmt die flüssige Fraktion ($F_1$) mit der Jodzahl oberhalb von 55 bis auf eine Temperatur von 40 bis 60 °C, um sie völlig in die flüssige Form zu überführen,

2b) man kühlt die Flüssigkeit aus der obigen Stufe 2a) bis auf eine Temperatur von 3 bis 5 °C über der Erstarrungstemperatur ab,

2c) man impft mit stabilisierten Kristallen der Form β' aus Palmöl an, die durch Lagerung für wenigstens 4 Wochen bei 20 bis 30 °C erhalten wurden,

2d) man kühlt die Suspension aus der obigen Stufe 2c) allmählich mit einer Geschwindigkeit von 0,5 bis 1,5 °C/h bis auf eine Temperatur von 15 bis 20 °C ab und läßt sie bei dieser Temperatur für 72 bis 120 h stehen, wobei man die Temperatur aufrechterhält, um die Kristallisation zu erreichen,

2e) man filtriert die Suspension aus Stufe 2d) bei einem allmählich stufenweise von 5,9 bis 6,9 bar (6-7 kg/cm$^2$) verstärkten Druck, wobei man den angelegten Druck wenigstens 5 min aufrechterhält, bis zu einem Maximaldruck von wenigstens 29,4 bar (30 kg/cm$^2$), und man hält den Maximaldruck wenigstens 1 h aufrecht und sammelt eine feste Fraktion ($C_2$) mit einer Jodzahl von 36 bis 38, die die gewünschte feste Fraktion bildet, sowie eine flüssige Fraktion ($F_2$), deren Jodzahl 65 bis 68 beträgt.

4. Verfahren nach Anspruch 3, dadurch gekennzeichnet, daß man in Stufe c) des ersten Fraktionierzyklus die Flüssigkeit mit 0,05 bis 0,2 Gew.-% stabilisierten Kristallen der β-Form aus Palmöl animpft und daß man in Stufe 2c) des zweiten Fraktionierzyklus die Flüssigkeit mit 0,05 bis 0,2 Gew.-% von stabilisierten Kristallen in der β'-Form aus Palmöl animpft.

5. Verfahren nach Anspruch 3, dadurch gekennzeichnet, daß man in Stufe 2d) des zweiten Fraktionierzyklus die Suspension für 8 bis 15 h bei der Animpftemperatur ruhen läßt, bevor man sie abkühlt.

6. Verfahren nach Anspruch 3, dadurch gekennzeichnet, daß man die flüssige Fraktion ($F_2$) für 2 bis 3 Tage bei etwa 15 °C kristallisieren läßt, daß man die erhaltene Suspension unter den Fraktionierbedingungen von Schritt 2e) des zweiten Fraktionierzyklus filtriert und daß man eine feste Fraktion ($C_3$), die man der Suspension in Stufe 2d) bei einem zweiten Fraktionierzyklus beimengt, den man auf eine letzte Charge anwendet, sowie eine flüssige Fraktion ($F_3$) sammelt.

15

7. Verwendung der bei der Durchführung des Verfahrens nach einem der Ansprüche 1 bis 6 gewonnenen festen Fraktionen in einer Fettzusammensetzung, die man bei der Süßwarenherstellung/ Schokoladenherstellung als Ersatz für Kakaobutter verwenden kann.

8. Verwendung der bei der Durchführung des Verfahrens nach einem der Ansprüche 1 bis 6 erhaltenen flüssigen Fraktionen als Tafelöl oder Fritieröl.

```
                              ┌─────────────────────┐
                              │   Graisse raffinée   │
                              │         (a)          │
                              └─────────────────────┘
                                         │
                              ┌─────────────────────┐
                              │ Refroidissement (b)  │
                              └─────────────────────┘
                                         │
┌──────────────────────────┐            │
│ Ensemencement avec des    │───────────►│
│ cristaux β stabilisés (c) │            │
└──────────────────────────┘            │
                              ┌─────────────────────┐
                              │ Refroidissement progressif │
                              │         (d)          │
                              └─────────────────────┘
                                         │
                              ┌─────────────────────┐
                              │   Fractionnement     │
                              │  par pressage (e)    │
                              └─────────────────────┘
                                         │
                                ┌────────┴────────┐
                          ┌──────────┐      ┌──────────┐
                          │   C₁     │      │   F₁     │
                          └──────────┘      └──────────┘
```

# FIG. 1

FIG. 2

2